# EUROPÄISCHE PATENTANMELDUNG

(11) **EP 0 850 796 A2**
(43) Veröffentlichungstag der Anmeldung: **01.07.1998**
(21) Anmeldenummer: 97118482.5
(22) Anmeldetag: 24.10.1997
(51) Int. Cl.: B60K 15/06

(54) **Verfahren zur Ermittlung der Kraftstoff-Restmenge im Kraftstofftank**

(30) Priorität: 30.12.1996 DE 19654728
(71) Anmelder: ROBERT BOSCH GMBH, 70442 Stuttgart (DE); Kautex Textron GmbH & Co. KG., 53229 Bonn (DE)
(72) Erfinder: Frank, Kurt, 73614 Schorndorf (DE); Fischerkeller, Rolf, 74399 Wahlheim (DE); Hahner, Rainer, 53757 St. Augustin (DE); Wagner, Axel, 53225 Bonn (DE)
(74) Vertreter: Voss, Klaus, Dipl.-Ing.

(57) **Zusammenfassung**

Bei einem Verfahren zur Ermittlung der momentan vorhandenen Kraftstoff-Restmenge im Kraftstofftank (10) eines Kraftfahrzeugs, bei dem die von einem Füllstandsmesser (20) ausgegebenen Meßwerte anhand der Tankgeometrie in Mengenwerte umgerechnet werden, werden zwecks hochgenauer Ermittlung der Kraftstoff-Restmenge diejenigen Mengenwerte, die aus bei ruhigem oder relativ wenig schwankendem Kraftstoffspiegel (14,19) erfaßten Meßwerte umgerechnet worden sind, fortlaufend gespeichert, und die aktuelle Kraftstoff-Restmenge wird als Differenz aus dem zuletzt gespeicherten Mengenwert und dem zeitlichen Integral des Kraftstoffverbrauchs vom Zeitpunkt der Speicherung an berechnet.

## Beschreibung

### Stand der Technik

Die Erfindung betrifft ein Verfahren zur Ermittlung der momentan vorhandenen Kraftstoff-Restmenge im Kraftstofftank eines Kraftfahrzeugs der im Oberbegriff des Anspruchs 1 definierten Gattung.

Bei Kraftfahrzeugen ist es bekannt, mit Hilfe eines im Kraftstofftank angeordneten Füllstandsmessers, der ein von der Füllhöhe abhängiges, elektrisches Meßsignal liefert, den aktuellen Kraftstoffinhalt anzuzeigen, indem der die Füllhöhe repräsentierte Meßwert anhand der Tankgeometrie umgerechnet wird.

Um im Reservebereich die noch vorhandene Kraftstoffmenge mit einer größeren Genauigkeit erfassen zu können, ist bei einer bekannten Meßvorrichtung für den Kraftstoffvorrat (DE 32 24 919 C2) im Kraftstofftank ein Hauptsensor und in einem im Kraftstofftank üblicherweise integrierten Schwalltopf, aus dem mittels einer Kraftstoffpumpe Kraftstoff gefördert wird, ein Hilfssensor des Füllstandsmessers angeordnet. Der Schwalltopf weist ein wesentlich kleineres Volumen als der Kraftstofftank auf und wird mittels einer Pumpe ständig mit Kraftstoff aus dem übrigen Tankbereich nachgefüllt. Solange der Kraftstofftank mehr oder weniger gefüllt ist, liefert der Hauptsensor die Meßwertsignale für die Kraftstoffvorratsanzeige. Ist nur noch der Schwalltopf gefüllt, so liefert nur noch der Hilfssensor die Meßwertsignale.

Preiswerte Füllstandsmesser weisen im allgemeinen einen Meßfehler auf, der sich um so gravierender bemerkbar macht, je kleiner die Bezugsmenge wird. Bei flach ausgeführtem Tankboden setzt zudem der Schwimmer des Füllstandsmessers vorzeitig auf dem Boden auf, so daß der Füllstandsmesser dann keine brauchbaren Werte mehr liefert. Dieser Effekt wird durch Schwappen der Flüssigkeit bei relativ geringem Kraftstoff-Restvolumen wesentlich verstärkt.

### Vorteile der Erfindung

Das erfindungsgemäße Verfahren mit den kennzeichnenden Merkmalen des Anspruchs 1 hat den Vorteil, daß auch im Restbereich des Tankinhalts, wenn also beispielsweise nur noch der Schwalltopf Kraftstoff und auch nur noch teilweise enthält, eine sehr genaue Angabe über die im Kraftstofftank noch vorrätige Kraftstoff-Restmenge zur Verfügung gestellt werden kann. Da heuzutage Kraftfahrzeuge in der Regel mit sog. Bordcomputern ausgestattet sind, die dem Fahrer beispielsweise Informationen über die gefahrenen Kilometer, die Durchschnittsgeschwindigkeit, den Kraftstoffverbrauch (momentan und im Durchschnitt) liefern, die aus Motorbetriebsgrößen ermittelt werden, ist der Aufwand für die Implementierung des erfindungsgemäßen Verfahrens in ein Kraftfahrzeug relativ gering, da hierfür der ohnehin vorhandene Bordcomputer genutzt werden kann, der lediglich um eine Programmroutine erweitert werden muß. Der benötigte Füllstandsmesser kann von üblicher Bauart sein und unterliegt keiner besonderen zusätzlichen Genauigkeitsanforderung, da der Füllstand immer nur dann gemessen wird, wenn der Kraftstoffspiegel aufgrund des Fahrzustandes des Fahrzeugs relativ ruhig ist, also keinen nennenswerten Schwankungen unterliegt, und damit der Füllstandsmesser trotz etwaiger systembedingter Meßfehler bereits ausreichend gute Meßwerte liefert. Diese Meßwerte werden laufend aktualisiert und dienen als Stützwerte für die momentan unter Berücksichtigung des Kraftstoffverbrauchs errechneten aktuellen Werte der Kraftstoff-Restmenge im Kraftstofftank.

Durch die in den weiteren Ansprüchen aufgeführten Maßnahmen sind vorteilhafte Weiterbildungen und Verbesserungen des im Anspruch 1 angegebenen Verfahrens möglich. Eine Meßvorrichtung zur Realisierung des erfindungsgemäßen Verfahrens in einem Kraftfahrzeug ist im Anspruch 5 angegeben.

### Zeichnung

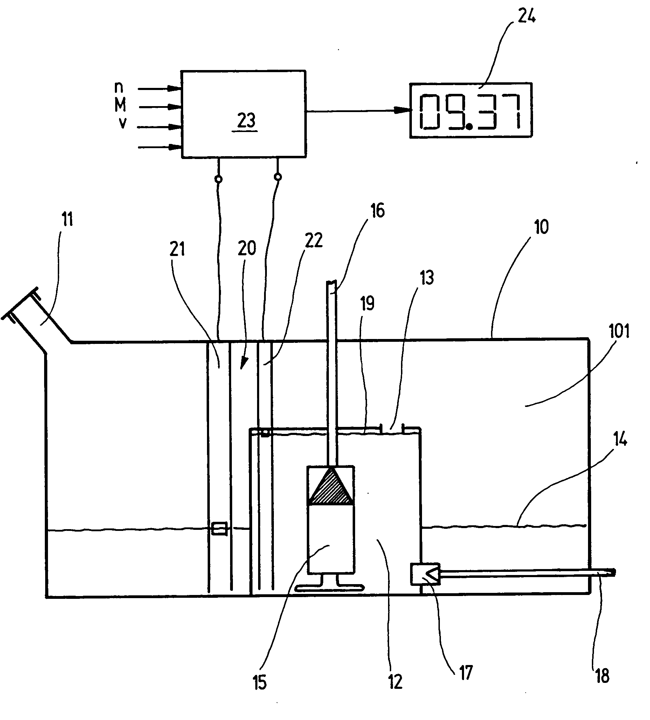

Die Erfindung ist anhand eines in der Zeichnung dargestellten Ausführungsbeispiels einer Meßvorrichtung zur Erfassung der momentan vorhandenen Kraftstoff-Restmenge im Kraftstofftank eines Fahrzeugs in der nachfolgenden Beschreibung näher erläutert. Dabei zeigt die Zeichnung in schematischer Darstellung einen Längsschnitt eines Kraftstofftanks mit Füllstandsmesser, Bordcomputer und Füllstandsanzeige.

### Beschreibung des Ausführungsbeispiels

Der in der Zeichnung dargestellte Kraftstofftank 10 für ein Kraftfahrzeug weist in bekannter Weise einen Einfüllstutzen 11 und ein im Innern des Kraftstofftanks 10 angeordneten sog. Schwalltopf 12 auf, der mit dem Boden des Kraftstofftanks 10 verbunden ist und oben eine Verbindungsöffnung 13 zum Tankraum 101 besitzt, über welche der Schwalltopf 12 beim Einfüllen von Kraftstoff in den Kraftstofftank gefüllt wird, sobald der Kraftstoffspiegel 14 die Höhe der Verbindungsöffnung 13 übersteigt. Im Schwalltopf 12 ist eine Kraftstoffpumpe 15 angeordnet, die Kraftstoff in eine Förderleitung 16 fördert. Der dem Schwalltopf 12 entnommene Kraftstoff wird ständig durch eine Pumpvorrichtung 17 ausgeglichen, die vorzugsweise nach dem Saugstrahlprinzip arbeitet und hierzu an den Kraftstoffrücklauf 18 angeschlossen ist. Die Pumpleistung der Pumpvorrichtung 17 ist so ausgelegt, daß der mit 19 angedeutete Kraftstoffspiegel im Schwalltopf 12 immer auf maximale Höhe gehalten wird, solange außerhalb des Schwalltopfes 12 noch Kraftstoff im Kraftstofftank 10 vorhanden ist.

Im Kraftstofftank 10 ist ein Füllstandsmesser 20 angeordnet, der einen innerhalb des Schwalltopfes 12 befindlichen Hilfssensor 22 und einen außerhalb des Schwalltopfes 12, in dem das Schwalltopf 12 umgebenden Tankraum 101 befindlichen Hauptsensor 21 aufweist. Haupt- und Hilfssensor 21,22 können von üblicher Technik sein und beispielsweise als Schwimmergeber ausgeführt sein, bei welchem ein Schwimmkörper in einem Füllstandsrohr geführt ist. Akustische oder thermoelektrische Sensoren sind ebenfalls möglich. Bis zur vollständigen Entleerung des den Schwalltopf 12 umgebenden Tankraums 101 liefert der Hauptsensor 21 elektrische Meßsignale die für die Füllhöhe des Tankraums 101, also für die Höhe des Kraftstoffspiegels 14, repräsentativ sind. Ist der Tankraum 101 vollständig entleert, so beginnt die Entleerung des Schwalltopfes 12 und der Hilfssensor 22 liefert nunmehr eine Aussage über die Höhe des Kraftstoffspiegels 19 im Schwalltopf 12. Die elektrischen Meßsignale von Hauptsensor 21 und Hilfssensor 22 werden einem elektronischen Rechner 23 zugeführt, der daraus die momentan vorhandene Kraftstoff-Restmenge errechnet und den Rechenwert einer Vorratsanzeige 24 zugeführt, in welcher dieser dem Fahrer sichtbar gemacht wird.

Um der Vorratsanzeige 24 hochgenaue Rechenwerte zu liefern, wird aus den von dem Füllstandsmesser 20 gelieferten elektrischen Meßwerten im Rechner 23 die momentan noch zur Verfügung stehende Kraftstoff-Restmenge nach folgendem Verfahren ermittelt:

In Fahrzuständen des Fahrzeugs, in welchen der Kraftstoffspiegel 14 weitgehend ruhig ist oder relativ wenig schwankt, werden die von dem Füllstandsmesser 20 (Hauptsensor 21 oder Hilfssensor 22) gelieferten elektrischen Meßwerte über den momentanen Füllstand des Kraftstofftanks 10 anhand der Tankgeometrie in Mengenwerte umgerechnet und abgespeichert. Diese Abspeicherung der Mengenwerte erfolgt fortlaufend, und zwar immer dann, wenn der Kraftstoffspiegel 14 bzw. 19 eine zulässige Schwankungsbreite nicht übersteigt. Die in anderen Fahrzuständen mit stark schwankendem Kraftstoffspiegel 14 bzw. 19 vom Füllstandsmesser 20 gelieferten Meßwerte werden unterdrückt. Mit Beginn einer jeden Speicherung eines zugelassenen Mengenwerts wird das zeitliche Integral des Kraftstoffverbrauchs fortlaufend berechnet, wobei der Kraftstoffverbrauch aus verfügbaren Daten der Motorsteuerung errechnet wird. Dieses zeitliche Integral des Kraftstoffverbrauchs wird von dem zuletzt gespeicherten Mengenwert abgezogen, und dieser Differenzwert wird in der Vorratsanzeige 24 zur Anzeige gebracht. Sobald ein neuer Mengenwert abgespeichert wird, wird der neue Mengenwert als Referenzwert für die Ermittlung der noch vorhandenen Kraftstoff-Restmenge in der vorstehend beschriebenen Weise herangezogen.

Als Maß für einen nicht oder wenig schwankenden Kraftstoffspiegel 14 bzw. 19 wird das stehende Fahrzeug vor dem Start oder mit laufendem Motor sensiert und ein entsprechender Speicherbefehl ausgegeben. Auch eine kontinuierliche Fahrstrecke mit wenig Bremsung und Beschleunigung wird sensiert und für die Auswertung der vom Füllstandsmesser 20 gelieferten Meßwerte zugelassen. Möglich ist auch ein Rechenprogramm, das zur Sensierung eines nicht oder nur wenig schwankenden Kraftstoffspiegels 14 fortlaufend den Mittelwert der von dem Füllstandsmesser 20 gelieferten Meßwerte bildet und mit einer vorgegebenen Schwankungsbreite vergleicht. Liegt der aktuelle Meßwert des Füllstandsmessers 20 innerhalb der zugelassenen Schwankungsbreite des Mittelwerts, so wird ein Speicherbefehl ausgelöst, und der zu diesem aktuellen Meßwert umgerechnete Mengenwert wird gespeichert und als Referenzpunkt zur Berechnung der momentan vorhandenen Kraftstoff-Restmenge in der vorstehend beschriebenen Weise herangezogen.

Als Rechner 23 wird der üblicherweise in Kraftfahrzeugen bereits vorhandene Bordcomputer verwendet, der dem Fahrer Informationen über den Fahrzustand seines Fahrzeugs liefert und hierzu Betriebsgrößen wie Drehzahl, Drehmoment, Geschwindigkeit und ähnliche zugeführt erhält.

## Patentansprüche

1. Verfahren zur Ermittlung der momentan vorhandenen Kraftstoff-Restmenge im Kraftstofftank eines Kraftfahrzeugs, bei dem ein Meßwert, der von einem die Füllhöhe im Kraftstofftank (10) erfassenden Füllstandsmesser (20) ausgegeben wird, anhand der Tankgeometrie in einen Mengenwert umgerechnet wird, dadurch gekennzeichnet, daß diejenigen Mengenwerte, die aus bei ruhigem oder nur wenig schwankendem Kraftstoffspiegel (14,19) erfaßten Meßwerten umgerechnet werden, fortlaufend gespeichert werden und daß die aktuelle Kraftstoff-Restmenge als Differenz aus dem zuletzt gespeicherten Mengenwert und dem zeitlichen Integral des Kraftstoffverbrauchs von dem Zeitpunkt der Speicherung dieses Mengenwerts an berechnet wird.

2. Verfahren nach Anspruch 1, dadurch gekennzeichnet, daß als Maß für einen nicht oder nur wenig schwankenden Kraftstoffspiegel (14,19) das stehende Fahrzeug vor dem Start oder mit laufendem Motor oder eine kontinuierliche Fahrstrecke mit wenig Bremsung und Beschleunigung sensiert und ein Speicherbefehl ausgegeben wird.

3. Verfahren nach Anspruch 1, dadurch gekennzeichnet, daß zur Sensierung eines nicht oder nur wenig schwankenden Kraftstoffspiegels (14,19) fortlaufend der Mittelwert der Meßwerte des Füllstandsmessers (20) gebildet und mit einer vorgegebenen Schwankungsbreite verglichen wird und daß bei einem innerhalb der Schwankungsbreite liegenden aktuellen Meßwert des Füllstandsmessers (20) die Speicherung des davon umgerechneten Mengenwerts ausgelöst wird.

4. Verfahren nach einem der Ansprüche 1 - 3, dadurch gekennzeichnet, daß der Kraftstoffverbrauch aus verfügbaren Daten der Motorsteuerung errechnet wird.

5. Vorrichtung zur Durchführung des Verfahrens nach einem der Ansprüche 1 - 4, dadurch gekennzeichnet, daß der Füllstandsmesser (20) im Kraftstofftank (10) und/oder in einem in bekannter Weise in dem Kraftstofftank (10) integrierten Schwalltopf (12) angeordnet und sein elektrischer Meßwert-Signalausgang mit einem Rechner (23), insbesondere mit einem im Kraftfahrzeug vorhandenen Bordcomputer, verbunden ist.
